# FASCICULE DE BREVET EUROPEEN

(11) **EP 2 887 166 B1**
(45) Date de publication et mention de la délivrance du brevet: **24.07.2019**
(21) Numéro de dépôt: 14198444.3
(22) Date de dépôt: 17.12.2014
(51) Int. Cl.: G05B 19/409, G06F 3/02, E06B 9/68

(54) **Procédé de paramétrage d'une unité de commande d'un équipement domotique**
Verfahren zur Parametereinstellung einer Steuereinheit eines haustechnischen Geräts
Method for configuring a unit for controlling a home automation system

(30) Priorité: 23.12.2013 FR 1363455
(43) Date de publication de la demande: 24.06.2015
(73) Titulaire: SOMFY ACTIVITES SA, 74300 Cluses (FR)
(72) Inventeur: Mauries, Fabrice, 74370 Pringy (FR)
(74) Mandataire: Bugnion Genève

(56) Documents cités:
- EP-A1- 1 710 640
- DE-A1- 10 342 531
- US-A1- 2009 158 188
- "Mode d'emploi, Lave Linge W 5820 WPS", , 27 novembre 2013 (2013-11-27), XP055134255, Extrait de l'Internet: URL:http://www.miele.fr/pmedia/ZGA/TX2070/ 9493750-000-01_9493750-01.pdf [extrait le 2014-08-11]
- Anonymous: "Équipement", Wikipédia, 3 November 2013 (2013-11-03), XP055239695, Retrieved from the Internet: URL:http://web.archive.org/web/20131103092 812/http://fr.wikipedia.org/wiki/%C3%89qui pement [retrieved on 2016-01-08]

## Description

### DOMAINE TECHNIQUE DE L'INVENTION

L'invention se rapporte à un procédé de paramétrage d'une unité de commande d'un équipement domotique. Elle se rapporte notamment à un procédé de paramétrage d'une commande d'un équipement domotique à l'aide d'une interface personne-machine rudimentaire.

### ETAT DE LA TECHNIQUE ANTERIEURE

Dans le document US 2009 0158188 est décrit un procédé de paramétrage d'une unité de commande (dite « module mural ») universelle, c'est-à-dire destinée à piloter plusieurs équipements domotiques en fonction de signaux d'entrée et de valeurs courantes de paramètres ajustables.

Certains équipements domotiques, notamment des équipements motorisés tels que les dispositifs d'entraînement de porte de garage, sont traditionnellement programmés à l'aide d'une interface personne-machine ne comportant que quelques boutons et un affichage alphanumérique très simple. Cette interface est d'autant plus simple qu'elle n'est destinée à être utilisée que rarement, au moment de l'installation de l'équipement, et le cas échéant au cours d'opérations de maintenance. Dans le manuel d'utilisation "Dexxo Pro 800-1000 RTS" publié par SOMFY, on trouve par exemple une telle interface personne-machine qui comporte un clavier comportant par exemple quelques touches et un écran d'affichage permettant d'afficher uniquement des combinaisons de deux caractères alphanumériques. En appuyant un certain temps sur une des touches (SET), l'installateur fait entrer l'interface dans un mode de paramétrage ou l'en fait sortir. Un premier paramètre (P1) apparaît sur l'écran. L'installateur peut faire défiler les paramètres (P1... P7, A0... A2) à l'écran en appuyant sur une touche "->" ou une touche "<-", l'ordre de succession des paramètres étant préprogrammé et figé dans l'interface. En appuyant sur l'une ou l'autre des touches "+" et "-", alors que l'un des paramètres Px ou Ax est affiché, l'installateur modifie la valeur du paramètre en question, la valeur prise apparaissant alors à l'écran. Cette
logique de défilement dans des menus est conforme aux besoins tant que le nombre de paramètres ajustables est faible. Mais elle devient fastidieuse lorsque le nombre de paramètres augmente.

Or on assiste à une sophistication croissante des besoins des utilisateurs et des capacités des équipements, qui se traduit par une augmentation du nombre de paramètres ajustables. Ces paramètres peuvent notamment concerner la configuration de l'installation (déclaration de périphériques) ou le paramétrage de fonctionnement (temporisations, vitesses, couples, sensibilité de détection d'obstacles, préavis de mouvement par feu orange, mode de marche, longueur de la zone d'accostage, type d'autotests, type d'action en cas de déclenchement de périphérique de sécurité...). La difficulté de l'installateur est alors double: tout d'abord, comme il ressort de l'exposé précédent, la circulation dans le menu de paramétrage est fastidieuse, car purement séquentielle, y compris dans le cas où les paramètres sont groupés par fonction commune. Par ailleurs, on constate que l'installateur peut alors avoir du mal, dans une situation donnée, à déterminer quels sont les paramètres dont l'ajustement est pertinent pour obtenir le comportement souhaité de l'équipement, et quelles sont les valeurs pertinentes de ces paramètres, ceci d'autant plus que certains réglages d'un paramètre donné en vue de configurer l'installation de la façon souhaitée, peuvent s'avérer contreproductifs, voire incompatibles, avec d'autres réglages d'autres paramètres. L'installeur est alors parfois contraint, du fait du grand nombre de paramètres disponibles, à tâtonner longtemps avant de trouver le paramétrage adéquat. Ces tâtonnements sont d'autant plus fastidieux que l'interface personne-machine de paramétrage, qui n'a vocation à être utilisée que très rarement, voire une seule fois, doit de préférence rester simple.

### EXPOSÉ DE L'INVENTION

L'invention vise à remédier aux inconvénients de l'état de la technique en vue de simplifier le paramétrage d'une commande d'un équipement domotique, à l'aide d'une interface personne-machine simple. Pour ce faire est proposé, suivant un premier aspect de l'invention, un procédé de paramétrage d'une unité de commande d'un équipement domotique, l'unité de commande étant destinée à piloter l'équipement domotique en fonction de signaux d'entrée et de valeurs courantes de paramètres de fonctionnement ajustables, caractérisé en ce qu'en réponse à une sélection sur une interface de saisie d'un profil de paramétrage parmi plusieurs profils de paramétrage disponibles, l'unité de commande mémorise comme valeurs courantes, pour au moins plusieurs paramètres ajustables associés au profil de paramétrage sélectionné, des valeurs par défaut fonction du profil de paramétrage sélectionné. Les paramètres de fonctionnement ajustables restent mémorisés et disponibles pour des exécutions successives du programme de commande exécuté par l'unité de commande et faisant appel aux valeurs mémorisées. Les paramètres les plus pertinents pour un profil de paramétrage donné se voient ainsi identifiés et une valeur par défaut leur est affectée, qui correspond au profil de paramétrage. L'installateur part ainsi d'un sous-ensemble de paramètres et de valeurs présélectionnées, qui sont a priori pertinents pour le profil de paramétrage choisi, ce qui se traduit par un gain de temps considérable.

De préférence, il existe au moins un premier sous-ensemble de paramètres ajustables associé à un premier des profils de paramétrage disponibles, et un deuxième sous-ensemble des paramètres ajustables associé à un deuxième des profils de paramétrage disponibles, le premier et le deuxième sous-ensemble étant différents. L'un des profils de paramétrage peut être associé à un sous-ensemble de paramètres correspondant à la totalité des paramètres ajustables, mais au moins un, et de préférence plusieurs, des profils de paramétrage sont associés à des sous-ensembles de paramètres du profil ne comportant pas tous les paramètres ajustables. De préférence, le premier sous-ensemble et le deuxième sous-ensemble ont une intersection non vide, ce qui traduit le fait que certains paramètres sont susceptibles d'être affectés à plusieurs profils de paramétrage. Dans cette hypothèse, il peut s'avérer que pour au moins un paramètre de fonctionnement ajustable appartenant au premier sous-ensemble et au deuxième sous-ensemble, la valeur par défaut pour le premier profil de paramétrage soit différente de la valeur par défaut pour le deuxième profil de paramétrage.

Suivant un mode de réalisation, on prévoit une étape d'ajustement des valeurs courantes par rapport aux valeurs par défaut pour au moins un des paramètres du profil de paramétrage sélectionné. On peut également prévoir une étape de retour des valeurs courantes aux valeurs par défaut pour au moins un des paramètres du profil de paramétrage sélectionné.

De préférence, on prévoit en outre, suite à la sélection du profil de paramétrage, une présentation séquentielle, sur une interface visuelle, des paramètres ajustables associés au profil de paramétrage sélectionné, à l'exclusion des paramètres ajustables qui ne sont pas associés au profil de paramétrage sélectionné. En réduisant le nombre de paramètres présentés, on évite que l'installateur modifie des paramètres non pertinents dans le profil de paramétrage sélectionné, voire accède à des paramètres dont la modification n'est pas recommandée dans le profil de paramétrage sélectionné. De préférence, l'un des profils de paramétrage correspond à un sous-ensemble incluant tous les paramètres ajustables. Ce profil peut être un profil de paramétrage "libre", permettant à l'installateur de s'affranchir, lorsque cela est nécessaire, des limitations inhérentes aux autres profils.

En rendant la présentation des paramètres dépendante du profil de paramétrage, on accélère l'accès aux paramètres pertinents dans la situation correspondant au profil de paramétrage sélectionné, on restreint l'accès à des paramètres non pertinents.

Suivant un mode de réalisation, la présentation des paramètres associés au profil de paramétrage sélectionné est faite dans un ordre déterminé en fonction du profil de paramétrage sélectionné. En modifiant l'ordre de présentation des paramètres du profil en fonction du profil de paramétrage sélectionné, on guide l'installateur qui se voit présenter les paramètres du profil dans un ordre pertinent pour le profil en question.

De préférence la présentation de chacun des paramètres associés profil de paramétrage sélectionné permet une confirmation ou une modification avec l'interface de saisie de la valeur courante mémorisée. Le nombre de valeurs possibles peut être limité à deux, ou être plus élevé. Suivant un mode de réalisation, on peut prévoir que pour au moins un des paramètres associés au profil de paramétrage sélectionné, la modification de la valeur mémorisée soit limitée à certaines valeurs compatibles parmi des valeurs possibles dudit paramètre, les valeurs compatibles étant fonction du profil de paramétrage sélectionné. On évite ainsi que l'installateur choisisse une valeur du paramètre qui n'est pertinente dans le profil de paramétrage sélectionné, ou qui est incompatible avec ce profil.

De préférence, les valeurs mémorisées, confirmées et/ou modifiées sont mémorisées dans une mémoire de l'unité de commande. Cette mémoire est de préférence intégrée à l'unité de commande.

Suivant un mode de réalisation, on prévoit une étape préalable de présentation séquentielle sur l'interface visuelle des profils de paramétrage disponibles. Il peut par exemple exister ainsi au moins un choix entre un profil de paramétrage restreignant les choix de l'installateur et un profil de paramétrage libre, ce dernier correspondant à l'état de la technique et permettant l'accès séquentiel à tous les paramètres ajustables qui apparaissent séquentiellement dans un ordre arbitraire prédéterminé.

Suivant un mode de réalisation particulièrement simple, la présentation sur l'interface visuelle d'un des paramètres du profil consiste en une désignation du paramètre à ajuster par au plus trois caractères alphanumériques.

Suivant un autre aspect de l'invention, celle-ci a trait à un procédé de commande d'un équipement domotique, comportant une étape de commande durant laquelle l'équipement domotique est actionné en fonction de signaux d'entrée et de paramètres de fonctionnement ajustables mémorisés, l'étape de commande étant précédée d'une étape de paramétrage conforme au procédé de paramétrage telle que décrite précédemment.

De préférence, certains au moins des signaux d'entrée sont reçus d'une ou plusieurs télécommandes qui génèrent de préférence les signaux d'entrée en fonction d'une saisie sur une interface personne-machine des télécommandes.

De préférence, les paramètres ajustables mémorisés ne sont ni modifiés ni oubliés durant l'étape de commande, de sorte que plusieurs étapes de commande peuvent se succéder en faisant appel au mêmes paramètres ajustables mémorisés, une quelconque modification des paramètres ajustables mémorisés nécessitant un nouveau passage par une étape de paramétrage conforme au procédé de paramétrage précédemment décrit.

Suivant un autre aspect de l'invention, celle-ci a trait à une unité de commande d'un actionneur d'équipement domotique comportant une mémoire pour stocker des valeurs courantes de paramètres de fonctionnement de l'actionneur, l'unité de commande comprenant en outre une interface personne-machine permettant à un installateur de sélectionner un profil de paramétrage parmi plusieurs profils de paramétrage disponibles pour l'équipement domotique et une mémoire pour stocker des valeurs par défaut de certains au moins des paramètres de fonctionnement, associées aux profils de paramétrage disponibles. Les paramètres de fonctionnement ajustables restent mémorisés et disponibles pour des exécutions successives du programme de commande exécuté par l'unité de commande et faisant appel aux valeurs mémorisées.

Elle a également trait à une installation incorporant une telle unité de commande ainsi qu'un actionneur d'équipement domotique et qu'une télécommande présentant de préférence une interface de saisie pour, dans un mode de commande, commander l'exécution d'un programme de commande en fonction d'une saisie d'une commande sur l'interface personne-machine de la télécommande et des valeurs courantes de paramètres de fonctionnement de l'actionneur, sans modifier ces dernières.

### BRÈVE DESCRIPTION DES FIGURES

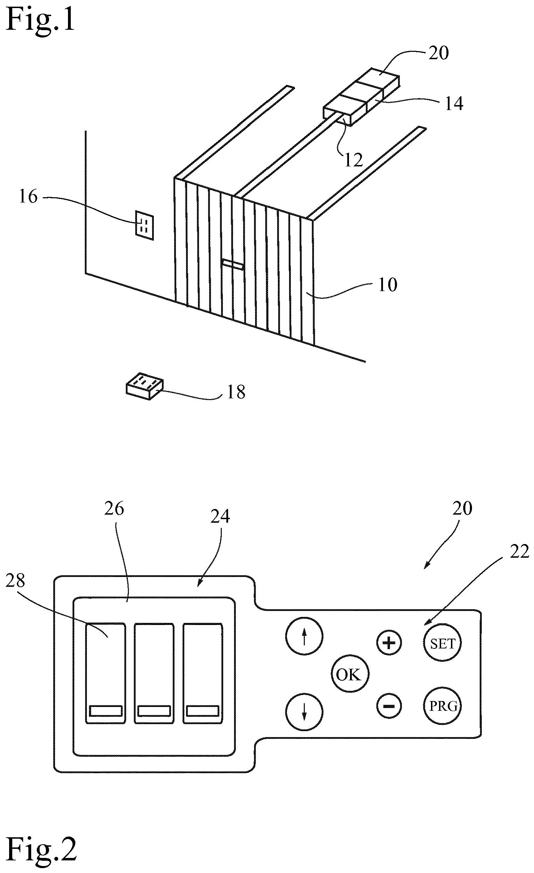

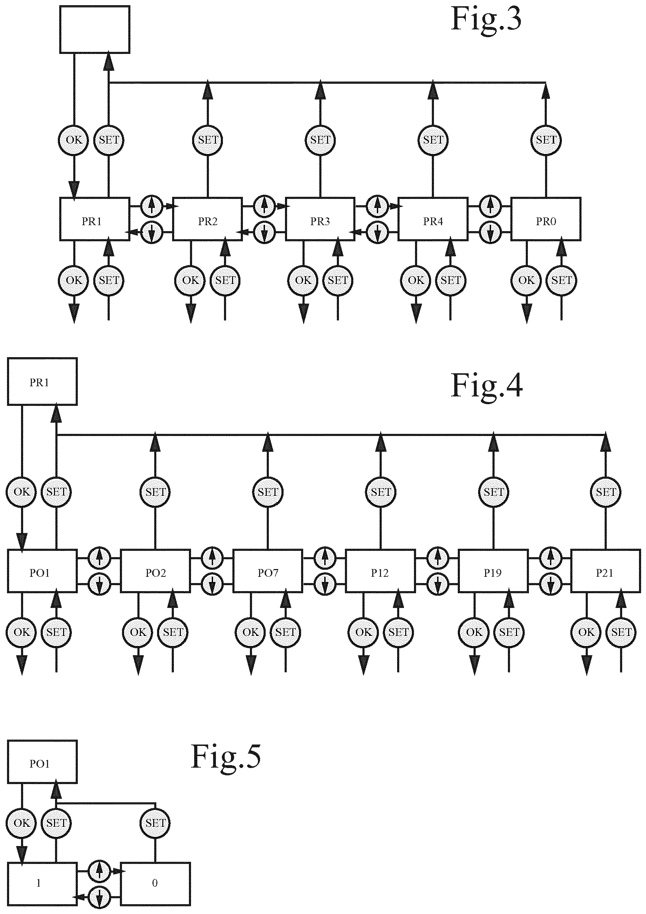

D'autres caractéristiques et avantages de l'invention ressortiront à la lecture de la description qui suit, en référence aux figures annexées, qui illustrent :- la figure 1, une installation domotique paramétrable suivant le procédé de l'invention;- la figure 2, une interface de paramétrage, de l'installation domotique de la figure 1 ;- la figure 3, une première étape d'un procédé de paramétrage selon l'invention;- la figure 4, une deuxième étape suivant l'étape de la figure 3;- la figure 5, une troisième étape suivant l'étape de la figure 4.

Pour plus de clarté, les éléments identiques seront repérés par des signes de référence identiques sur l'ensemble des figures.

### DESCRIPTION DÉTAILLÉE DE MODES DE RÉALISATION

Sur la figure 1 est illustré un équipement domotique 10, en l'espèce une porte de garage, dont les mouvements sont pilotés par une unité de commande au travers d'un actionneur muni d'un actionneur pourvu d'un moteur 12. L'unité de commande 14 est susceptible de communiquer à distance par exemple avec une télécommande filaire 16, par exemple un clavier mural, et avec une télécommande nomade non filaire 18, par exemple par voie radioélectrique. De plus, en vue de son installation ou de sa maintenance, l'unité de commande 14 est reliée à une interface personne-machine 20, qui peut être physiquement intégrée à l'unité de commande comme illustré sur la figure 1 ou située à distance de celle-ci.

L'interface personne-machine de paramétrage 20, illustrée en détail sur la figure 2, comporte une interface de saisie 22 constituée par un clavier 24 comportant par exemple quelques touches et une interface d'affichage 26, qui dans cet exemple est composée de trois pavés alphanumériques 28 permettant chacun d'afficher un caractère alphanumérique. Elle peut également intégrer un processeur lié à une mémoire, pour exécuter un programme de paramétrage de l'unité de commande. Alternativement, ce programme peut être exécuté par l'unité de commande elle-même, qui interagit avec l'interface de saisie et l'interface d'affichage.

Le programme de pilotage fait appel à un grand nombre de paramètres ajustables mémorisés dans une mémoire réinscriptible et qui sont utilisés lors de l'interprétation et de l'exécution des ordres reçus par une des télécommande 16, 18. Pour fixer les idées, le pilotage de l'équipement peut faire appel par exemple à 32 paramètres différents, numérotés dans la suite P01 à P32, dont les valeurs sont mémorisées dans une mémoire de l'unité de commande 14. A titre d'illustration, certains de ces paramètres ont été reportés dans la table 1 suivante:

| Code | Désignation | Valeurs |
|---|---|---|
| P01 | Mode de fonctionnement | 0 : séquentiel |
| | | 1 : fermeture automatique |
| P02 | Temporisation fermeture automatique | 0 à 12 (valeur temporisation = valeur x 10 s) |
| P07 | Déclaration des cellules photoélectriques | 0: Avec autotest |
| | | 1: Sans autotest |
| P12 | Préavis du feu orange | 0 : sans préavis |
| | | 1 : avec préavis de 2 s |
| P19 | Vitesse en fermeture | Échelle de 0 à 9 avec 0: vitesse minimale et 9 vitesse maximale |
| P21 | Zone de ralentissement en fermeture | 0: courte |
| | | 1: moyenne |
| | | 2: longue |
| P22 | Zone de ralentissement à l'ouverture | 0: courte |
| | | 1: moyenne |
| | | 2: longue |
| P25 | Limitation de couple à la fermeture | Échelle de 1 à 6 |
| P26 | Limitation de couple à l'ouverture | Échelle de 1 à 6 |
| P31 | Limitation de couple dans la zone d'accostage en butée de fermeture | 0: sans |
| | | 1: avec |
| P32 | Limitation de couple dans la zone d'accostage en butée de fermeture | 0: sans |
| | | 1: avec |

L'interface de paramétrage 20 fonctionne de la manière suivante. Pour entrer dans un mode de paramétrage, l'installateur maintien la touche "SET" appuyée pendant un certain temps, comme illustré sur la figure 3. L'entrée dans la mode de paramétrage se manifeste par l'apparition sur l'écran d'affichage d'une proposition première proposition de profil "PR1". L'installateur peut soit valider ce profil en appuyant sur la touche de validation "OK", soit faire défiler les profils disponibles (PR1... PRn) à l'écran en appuyant sur les touches fléchées, l'ordre de succession des paramètres étant préprogrammé et figé dans l'interface, soit enfin sortir de ce niveau dans la hiérarchie de navigation en appuyant sur la touche "SET". La validation d'un profil PRx parmi les profils disponibles fait basculer dans un menu de présentation séquentielle des paramètres pertinents pour ce profil.

On peut ainsi définir par exemple un profil PR1 visant à une "fermeture automatique", dans lesquels les paramètres pertinents sont les paramètres P01, P02, P07, P12, P19 et P21, un profil PR2 dit profil de "fonctionnement rapide", pour lequel les paramètres pertinents sont les paramètres P01, P07, P19, P20, P21, P22 et P24, un profil PR3 "zone ventée" pour lequel les paramètres pertinents sont les paramètres P01, P18, P19, P20, P21, P22, P25, P26, P31 et P32, ou un profil PR4 dit de "marche séquentielle", pour lequel les paramètres pertinents sont les paramètres P01, P19, P20, P21, P22, P23, P24, P25 et P26. L'un des profils de paramétrage, par exemple le profil PR0, permettra l'accès séquentiel à l'intégralité des paramètres P01 à P41 de pilotage de l'équipement domotique. Le nombre de profils est idéalement inférieur au nombre de paramètres.

Pour au moins un des profils, et de préférence pour chaque profil, on associe les paramètres pertinents associés au profil considéré se voient affecter des valeurs par défaut préprogrammée.

On peut par exemple associer au programme P01 "fermeture automatique" des valeurs par défaut des paramètres pertinents, qui sont mémorisées dans l'interface de paramétrage:
- P01 = 1 : Mode de marche Mode AUTO
- P02 = 4 : Temporisation refermeture fixée à 40s
- P07 = 2 : Déclaration cellules photo avec autotests
- P12 = 1 : Préavis feu orange 2s
- P19 = 5 : Vitesse de fermeture niveau 5 sur échelle de 1 (mini) - 10 (maxi)
- P21 = 6 : Zone de ralentissement en fermeture la plus longue avant butée fermeture

De manière similaire, on peut associer des valeurs par défaut aux paramètres pertinents pour le profil PR02 « Rapide »:
- P01 = 0 : Mode de marche Mode SEQUENTIEL
- P07 = 0 : Pas de préavis de feu orange
- P19 = 10 : Vitesse fermeture MAXI
- P20 = 10 : Vitesse ouverture MAXI
- P21 = 0 : Zone de ralentissement en fermeture la plus courte avant butée fermeture
- P22 = 0 : Zone de ralentissement en ouverture la plus courte avant butée fermeture
- P23 = 1 : décalage minimum de ventaux en fermeture
- P24 = 1 : décalage minimum de ventaux en ouverture

Pour le profil PR03, « Zone ventée », on peut affecter aux paramètres associés des valeurs par défaut suivantes:
- P01 = 0 : Mode de marche Mode AUTO
- P18 = 1 : Pilotage gâche motorisée (maintient porte fermée)
- P19 = 1 : Vitesse fermeture mini
- P20 = 1 : Vitesse ouverture mini
- P21 = 0 : Zone de ralentissement en fermeture la plus courte avant butée fermeture
- P22 = 0 : Zone de ralentissement en ouverture la plus courte avant butée fermeture
- P25 = 1 : Limitation de couple mini à la fermeture
- P26 = 1 : Limitation de couple mini à l'ouverture
- P31 = 10 : Limitation de couple dans la zone d'accostage en butée de fermeture
- P32 = 10 : Limitation de couple dans la zone d'accostage en butée d'ouverture

Pour le profil PR04 « Protection des personnes », les valeurs par défaut peuvent être les suivantes:
- P01 = 0 : Mode de marche Mode SEQUENTIEL
- P19 = 1 : Vitesse fermeture mini
- P20 = 1 : Vitesse ouverture mini
- P21 = 6 : Zone de ralentissement en fermeture la plus longue avant butée fermeture
- P22 = 6 : Zone de ralentissement en ouverture la plus longue avant butée fermeture
- P23 = 10 : Décalage maximum de ventaux en fermeture
- P24 = 10: Décalage maximum de ventaux en ouverture
- P25 = 10: Limitation de couple MAXI à la fermeture
- P26 = 10: Limitation de couple MAXI à l'ouverture

L'interface de paramétrage ou l'unité de commande comporte une première mémoire comportant une table de valeur par défaut pour chacun des profils de paramétrage. La sélection d'un des profils de paramétrage par la touche de validation "OK" a pour effet l'actualisation des valeurs courantes des paramètres pertinents d'une deuxième mémoire avec les valeurs par défaut du profil correspondant. La sélection d'un paramètre à ajuster parmi les paramètres du profil considéré a pour effet la visualisation du paramètre par défaut, devenu valeur courante. L'installateur peut naturellement sélectionner une valeur différente en circulant, selon la même procédure que précédemment, entre les valeurs possibles pour le paramètre en question. Ainsi la valeur courante du paramètre ajusté, dans la deuxième mémoire sera actualisée, sans toutefois que la valeur par défaut de la première mémoire en soit effacée.

Suite à la validation d'un des profils, par exemple le profil PR1, par appui sur la touche "OK", l'interface entre dans une couche de navigation inférieure illustrée sur la figure 4 et indique sur l'afficheur le premier paramètre à ajuster, à savoir dans cet exemple P01. L'installateur peut naviguer entre les paramètres pertinents pour le profil de paramétrage sélectionné en appuyant sur les touches fléchées, faisant ainsi apparaître successivement les autres paramètres: P02, P07, P12, P19 et P21. L'installateur peut sélectionner l'un ou l'autre des paramètres en appuyant sur la touche "OK". En réponse à cette sélection, l'afficheur affiche une valeur courante du paramètre en question parmi les valeurs disponibles pour ce paramètre. Par exemple, si le paramètre sélectionné est le paramètre P01 comme illustré sur la figure 5, les deux valeurs possibles sont "0" et "1", alors que pour le paramètre P19, dix valeurs sont possibles, à savoir entre "0" à "9". Sans ajustement au cours d'une étape précédente, la valeur courante du paramètre apparaissant lorsque le paramètre est sélectionné est la valeur par défaut correspondant au profil de paramétrage sélectionné précédemment. Dans le cas du profil PR1, la valeur courante apparaissant lorsque l'installateur sélectionne le paramètre P01 est donc la valeur "1". De nouveau, l'installateur peut naviguer entre les valeurs possibles avec les touches fléchées et en valider une avec la touche de validation "SET" Cette validation le fait remonter d'un niveau dans la hiérarchie de navigation et fait réapparaître le paramètre qui vient d'être validé. Pour quitter la navigation entre les paramètres P02, P07, P12, P19 et P21 du profil PR1, l'installateur appuie sur la touche "SET", qui fait remonter d'un niveau dans la hiérarchie de navigation, ce qui se traduit par l'affichage du profil en cours, à savoir PR1. Pour quitter le mode paramétrage par profils, l'installateur appuie de nouveau sur la touche "SET".

On comprend qu'en limitant le nombre de paramètres du profil pour un profil donné, on simplifie grandement le travail de l'installateur, d'une part en lui évitant d'intervenir par méconnaissance ou par erreur sur un paramètre non pertinent pour le profil considéré, et d'autre part en limitant le nombre de manipulations pour accéder à un des paramètres pertinents.

Une fois paramétrée, l'unité de commande 14 est prête à communiquer avec les télécommandes 16, 18 pour piloter le moteur 12 de l'équipement domotique 10, dans les conditions de fonctionnement requises par le choix du profil de fonctionnement et des valeurs de paramètres associés. En réponse à des signaux reçus d'une des télécommandes 16, 18, l'unité de commande 14 exécute un programme de commande faisant appel aux valeurs mémorisées de certains au moins des paramètres P01 à P32, les ordres envoyés au moteur 12 dépendant ainsi des signaux reçus des télécommandes et des valeurs des paramètres mémorisés. Les signaux générés par les télécommandes peuvent être générés automatiquement sans intervention humaine, par exemple lorsque la télécommande nomade 18 entre dans un champ de proximité de l'unité de commande 14, ou de préférence suite à une saisie d'une commande sur une interface personne-machine de commande de la télécommande 16, 18. Naturellement, les valeurs mémorisées des paramètres P01 à P032 n'ont pas vocation à être modifiés durant l'exécution du programme de commande et n'ont pas vocation à être oubliées à l'issue de cette exécution. Au contraire, les paramètres P01 à P032 restent mémorisés et disponibles pour des exécutions successives du programme de commande, et ce jusqu'à ce qu'ils soient éventuellement modifiés par une nouvelle entrée dans le mode de paramétrage.

Suivant une autre variante, on peut, pour l'un ou l'autre des profils de paramétrage, limiter la liste des valeurs accessibles ajustable de l'un ou l'autre des paramètres, à un sous-ensemble des valeurs possibles pour ce paramètre. On peut ainsi éviter que certaines valeurs d'un paramètre donné, qui seraient non pertinentes pour un profil choisi donné, soient malgré tout choisies par erreur ou ignorance.

Suivant une autre variante, on peut, pour l'un ou l'autre des profils de paramétrage, présenter les paramètres modifiables dans un ordre spécifique pertinent pour le paramétrage de l'unité de commande conformément au profil choisi. Ainsi la navigation d'un paramètre à l'autre ne se fait-elle plus dans l'ordre croissant présenté plus haut, mais dans un ordre différent.

Suivant une variante alternative, la sélection d'un profil de paramétrage quelconque permet l'accès séquentiel à tous les paramètres ajustables de pilotage, mais suivant une séquence à chaque fois différente, et le cas échéant avec des valeurs par défaut différentes, en commençant par les paramètres pertinents pour le profil considéré.

Suivant une autre variante, on fait appel à une interface plus conviviale telle qu'une tablette ou un micro-ordinateur, qui déroule un questionnaire permettant de sélectionner un profil de paramétrage adapté. Par exemple les questions peuvent être du type
- Q1 : Avez-vous des enfants ? (option périphérique de sécurité+vitesse & couple faible)
- Q2 : Habitez vous en zone venteuse ? (option AUTO)
- Q3 : Votre porte de garage donne-t-elle sur voie publique ? (option feu orange + cellules photo électriques)
- Q4 : Souhaitez vous maximiser la durée de vie de votre produit porteur ? (option vitesse faibles, mode SEQUENTIEL)
- Q5 : Souhaitez vous écononiser de l'énergie (vitesses faibles, périphériques en veille, temps de réaction plus lent à la commande)
- Q6 : ....

Ce type d'approche en "langage clair" permet un réglage simplifié plus didactique et un gain de temps. Il assure également un accompagnement de l'installateur afin d'éviter des mauvaises interprétations de réglages de paramètres. A l'issue du questionnaire, le programme détermine le profil correspondant et les valeurs par défaut correspondantes. Il reste malgré tout possible de modifier les paramètres un à un.

## Revendications

1. Procédé de paramétrage d'une unité de commande (14) d'un équipement domotique (10), l'unité de commande (14) étant destinée, une fois paramétrée, à piloter l'équipement domotique (10) en fonction de signaux d'entrée reçus de télécommandes et de valeurs courantes de paramètres de fonctionnement ajustables (P01,... P32), **caractérisé en ce qu'**en réponse à une sélection sur une interface de saisie d'un profil de paramétrage (PR1.. PR4) parmi plusieurs profils de paramétrage disponibles pour l'équipement domotique (10), l'unité de commande mémorise comme valeurs courantes, pour au moins plusieurs paramètres de fonctionnement ajustables associés au profil de paramétrage sélectionné, des valeurs par défaut fonction du profil de paramétrage sélectionné et **en ce que** les paramètres de fonctionnement ajustables (P01 à P32) restent mémorisés et disponibles pour des exécutions successives du programme de commande exécuté par l'unité de commande et faisant appel aux valeurs mémorisées de certains au moins desdits paramètres (P01 à P32).

2. Procédé de paramétrage selon la revendication 1, **caractérisé en ce qu'**il existe au moins un premier sous-ensemble de paramètres ajustables (P01... P32) associé à un premier des profils de paramétrage disponibles, et un deuxième sous-ensemble des paramètres ajustables associé à un deuxième des profils de paramétrage disponibles, le premier et le deuxième sous-ensemble étant différents.

3. Procédé de paramétrage selon la revendication 2, **caractérisé en ce que** le premier sous-ensemble et le deuxième sous-ensemble ont une intersection non vide.

4. Procédé de paramétrage selon la revendication 3, **caractérisé en ce que** pour au moins un paramètre de fonctionnement ajustable appartenant au premier sous-ensemble et au deuxième sous-ensemble, la valeur par défaut pour le premier profil de paramétrage est différente de la valeur par défaut pour le deuxième profil de paramétrage.

5. Procédé de paramétrage selon l'une quelconque des revendications précédentes, **caractérisé en ce qu'**il comporte une étape de modification des valeurs courantes par rapport aux valeurs par défaut pour au moins un des paramètres du profil de paramétrage sélectionné.

6. Procédé de paramétrage selon l'une quelconque des revendications précédentes, **caractérisé en ce qu'**il comporte une étape de retour des valeurs courantes aux valeurs par défaut pour au moins un des paramètres du profil de paramétrage sélectionné.

7. Procédé de paramétrage selon l'une quelconque des revendications précédentes, **caractérisé en ce qu'**il comporte en outre, suite à la sélection du profil de paramétrage, une présentation séquentielle, sur une interface visuelle, des paramètres ajustables associés au profil de paramétrage sélectionné, à l'exclusion des paramètres ajustables qui ne sont pas associés au profil de paramétrage sélectionné.

8. Procédé de paramétrage selon la revendication 7, **caractérisé en ce que** la présentation des paramètres associés au profil de paramétrage sélectionné (P01... P32) est faite dans un ordre déterminé en fonction du profil de paramétrage sélectionné (PR1... PR4).

9. Procédé de paramétrage selon l'une quelconque des revendications 7 ou 8, **caractérisé en ce que** la présentation de chacun des paramètres associés au profil de paramétrage sélectionné (P01... P32) permet une confirmation ou une modification avec l'interface de saisie de la valeur courante mémorisée.

10. Procédé de paramétrage selon la revendication 9, **caractérisé en ce que**, pour au moins un des paramètres associés au profil de paramétrage sélectionné, la modification de la valeur mémorisée est limitée à certaines valeurs compatibles parmi des valeurs possibles dudit paramètre, les valeurs compatibles étant fonction du profil de paramétrage sélectionné.

11. Procédé de paramétrage selon l'une quelconque des revendications 9 à 10, **caractérisé en ce que** les valeurs mémorisées, confirmées et/ou modifiées sont mémorisées dans une mémoire de l'unité de commande.

12. Procédé de paramétrage selon l'une quelconque des revendications 7 à 11, **caractérisé en ce que** la présentation sur l'interface visuelle d'un des paramètres du profil consiste en une désignation du paramètre à ajuster par au plus trois caractères alphanumériques.

13. Procédé de paramétrage selon l'une quelconque des revendications précédentes, **caractérisé en ce qu'**il comporte une étape de présentation séquentielle sur l'interface visuelle des profils de paramétrage disponibles, préalable à l'étape de sélection sur l'interface de saisie d'un profil de paramétrage (PR1.. PR4).

14. Procédé de commande d'un équipement domotique, comportant une étape de commande durant laquelle l'équipement domotique est actionné en fonction de signaux d'entrée et de paramètres de fonctionnement ajustables mémorisés, **caractérisé en ce que** l'étape de commande est précédée d'une étape de paramétrage conforme au procédé de paramétrage selon l'une quelconque des revendications précédentes.

15. Procédé de commande selon la revendication 14, **caractérisé en ce que** certains au moins des signaux d'entrée sont reçus d'une télécommande (16, 18).

16. Unité de commande d'un actionneur d'équipement domotique (10) comportant une mémoire pour stocker des valeurs courantes de paramètres de fonctionnement de l'actionneur, **caractérisé en ce qu'**elle comprend une interface personne-machine permettant à un installateur de sélectionner un profil de paramétrage parmi plusieurs profils de paramétrage disponibles pour l'équipement domotique (10) et une mémoire pour stocker des valeurs par défaut de certains au moins des paramètres de fonctionnement, associées aux profils de paramétrage sélectionné et **en ce que** les paramètres de fonctionnement restent mémorisés et disponibles pour des exécutions successives d'un programme de commande exécuté par l'unité de commande et faisant appel aux valeurs mémorisées de certains au moins desdits paramètres de fonctionnement.

## Patentansprüche

1. Verfahren zur Parametereinstellung einer Steuereinheit (14) eines haustechnischen Geräts (10), wobei die Steuereinheit (14) ausgelegt ist, nachdem sie parametereingestellt ist, das haustechnische Gerät (10) in Funktion von Eingangssignalen zu steuern, die von Fernbedienungen und laufenden Werten von einstellbaren Funktionsparametern (P01, ... P32) erhalten werden, **dadurch gekennzeichnet, dass** in Reaktion auf eine Auswahl aus einer Schnittstelle zur Erfassung eines Parametereinstellungsprofils (PR1 ... PR4) aus mehreren Parametereinstellungsprofilen, die für das haustechnische Gerät (10) verfügbar sind, die Steuereinheit als laufende Werte für mindestens mehrere einstellbare Funktionsparameter, die mit dem ausgewählten Parametereinstellungsprofil assoziiert sind, Werte standardmäßig in Funktion des ausgewählten Parametereinstellungsprofils speichert, und dadurch, dass die einstellbaren Funktionsparameter (P01 bis P32) gespeichert und verfügbar für aufeinander folgende Durchführungen des Steuerprogramms bleiben, das von der Steuereinheit durchgeführt wird und die gespeicherten Werte mindestens bestimmter der Parameter (P01 bis P32) aufruft.

2. Verfahren zur Parametereinstellung nach Anspruch 1, **dadurch gekennzeichnet, dass** mindestens eine erste Untermenge von einstellbaren Parametern (P01 ... P32) vorhanden ist, die mit einem ersten der verfügbaren Parametereinstellungsprofile assoziiert ist, und eine zweite Untermenge von einstellbaren Parametern, die mit einem zweiten der verfügbaren Parametereinstellungsprofile assoziiert ist, wobei die erste und die zweite Untermenge verschieden sind.

3. Verfahren zur Parametereinstellung nach Anspruch 2, **dadurch gekennzeichnet, dass** die erste Untermenge und die zweite Untermenge eine nicht leere Schnittmenge aufweisen.

4. Verfahren zur Parametereinstellung nach Anspruch 3, **dadurch gekennzeichnet, dass** für mindestens einen einstellbaren Funktionsparameter, der zur ersten Untermenge und zur zweiten Untermenge gehört, der standardmäßige Wert für das erste Parametereinstellungsprofil verschieden vom standardmäßigen Wert für das zweite Parametereinstellungsprofil ist.

5. Verfahren zur Parametereinstellung nach einem der vorhergehenden Ansprüche, **dadurch gekennzeichnet, dass** es einen Schritt zum Modifizieren der laufenden Werte in Bezug auf die standardmäßigen Werte für mindestens einen der Parameter des ausgewählten Parametereinstellungsprofils umfasst.

6. Verfahren zur Parametereinstellung nach einem der vorhergehenden Ansprüche, **dadurch gekennzeichnet, dass** es einen Schritt des Rückstellens der laufenden Werte zu den standardmäßigen Werten für mindestens einen der Parameter des ausgewählten Parametereinstellungsprofils umfasst.

7. Verfahren zur Parametereinstellung nach einem der vorhergehenden Ansprüche, **dadurch gekennzeichnet, dass** es außerdem, nach der Auswahl des Parametereinstellungsprofils, eine sequenzielle Darstellung auf einer visuellen Schnittstelle der einstellbaren Parameter umfasst, die mit dem ausgewählten Parametereinstellungsprofil assoziiert sind, unter Ausschluss der einstellbaren Parameter, die nicht mit dem ausgewählten Parametereinstellungsprofil assoziiert sind.

8. Verfahren zur Parametereinstellung nach Anspruch 7, **dadurch gekennzeichnet, dass** die Darstellung der Parameter, die mit dem ausgewählten Parametereinstellungsprofil (P01... P32) assoziiert sind, in einer bestimmten Reihenfolge in Funktion des ausgewählten Parametereinstellungsprofils (PR1 ... PR4) erfolgt.

9. Verfahren zur Parametereinstellung nach einem der Ansprüche 7 oder 8, **dadurch gekennzeichnet, dass** die Darstellung jedes der Parameter, die mit dem ausgewählten Parametereinstellungsprofil (P01 ... P32) assoziiert sind, eine Bestätigung oder eine Modifizierung mit der Schnittstelle zur Erfassung des gespeicherten laufenden Werts ermöglicht.

10. Verfahren zur Parametereinstellung nach Anspruch 9, **dadurch gekennzeichnet, dass** für mindestens einen der Parameter, die mit dem ausgewählten Parametereinstellungsprofil assoziiert sind, die Modifizierung des gespeicherten Werts auf bestimmte kompatible Werte unter möglichen Werten des Parameters begrenzt ist, wobei die kompatiblen Werte eine Funktion des gewählten Parametereinstellungsprofils sind.

11. Verfahren zur Parametereinstellung nach einem der Ansprüche 9 bis 10, **dadurch gekennzeichnet, dass** die gespeicherten, bestätigten und/oder modifizierten Werte in einem Speicher der Steuereinheit gespeichert sind.

12. Verfahren zur Parametereinstellung nach einem der Ansprüche 7 bis 11, **dadurch gekennzeichnet, dass** die Darstellung auf der visuellen Schnittstelle eines der Parameter des Profils aus einer Bezeichnung des einzustellenden Parameters durch höchstens drei alphanumerische Zeichen besteht.

13. Verfahren zur Parametereinstellung nach einem der vorhergehenden Ansprüche, **dadurch gekennzeichnet, dass** es einen Schritt des sequenziellen Darstellens auf der visuellen Schnittstelle der verfügbaren Parametereinstellungsprofile vor dem Schritt des Auswählens auf der Schnittstelle zur Erfassung eines Parametereinstellungsprofils (PRI ... PR4) umfasst.

14. Verfahren zum Steuern eines haustechnischen Geräts, umfassend einen Schritt des Steuerns, während dessen das haustechnische Gerät in Funktion von Eingangssignalen und gespeicherten einstellbaren Funktionsparametern betätigt wird, **dadurch gekennzeichnet, dass** dem Schritt des Steuerns ein Schritt des Parametereinstellens gemäß dem Verfahren zur Parametereinstellung nach einem der vorhergehenden Ansprüche vorausgeht.

15. Verfahren nach Anspruch 14, **dadurch gekennzeichnet, dass** mindestens einige der Eingangssignale von einer Fernbedienung (16, 18) erhalten werden.

16. Steuereinheit einer Betätigungsvorrichtung eines haustechnischen Geräts (10), umfassend einen Speicher, um laufende Werte der Funktionsparameter der Betätigungsvorrichtung zu speichern, **dadurch gekennzeichnet, dass** sie eine Mensch-Maschinen-Schnittstelle umfasst, die es einem Installateur ermöglicht, ein Parametereinstellungsprofil aus mehreren verfügbaren Parametereinstellungsprofilen für das haustechnische Gerät (10) und einen Speicher zum Speichern der standardmäßigen Werte von mindestens bestimmten der Funktionsparameter, die mit dem ausgewählten Parametereinstellungsprofil assoziiert sind, auszuwählen, und dadurch, dass die Funktionsparameter für aufeinander folgende Durchführungen eines Steuerprogramms gespeichert und verfügbar bleiben, das von der Steuereinheit ausgeführt wird, und die gespeicherten Werte mindestens bestimmter der Funktionsparameter aufgerufen werden.

## Claims

1. A method for configuring a control unit (14) of a piece of home automation equipment (10), the control unit (14) being intended, once configured, to control the piece of home automation equipment (10) based on input signals received from remote controls and current values of adjustable operating parameters (P01,... P32), **characterized in that** in response to a selection on an entry interface of a configuration profile (PR1... PR4) from among several available configuration profiles for the home automation equipment (10), the control unit stores, as current values, for at least several adjustable operating parameters associated with the selected configuration profile, default values depending on the selected configuration profile and **in that** the adjustable operating parameters (P01 to P32) remain stored and available for successive executions of the control program executed by the control unit and calling on the stored values of at least some of said parameters (P01 to P32).

2. The configuration method according to claim 1, **characterized in that** at least a first subset of adjustable parameters (P01... P32) exists associated with a first of the available configuration profiles, and a second subset of adjustable parameters associated with a second of the available configuration profiles, the first and second subsets being different.

3. The configuration method according to claim 2, **characterized in that** the first subset and the second subset have a nonempty intersection.

4. The configuration method according to claim 3, **characterized in that** for at least one adjustable operating parameter belonging to the first subset and the second subset, the default value for the first configuration profile is different from the default value for the second configuration profile.

5. The configuration method according to any one of the preceding claims, **characterized in that** it includes a step for modifying current values relative to the default values for at least one of the parameters of the selected configuration profile.

6. The configuration method according to any one of the preceding claims, **characterized in that** it includes a step for returning current values to the default values for at least one of the parameters of the selected configuration profile.

7. The configuration method according to any one of the preceding claims, **characterized in that** it further includes, after the selection of the configuration profile, a sequential presentation, on a visual interface, of the adjustable parameters associated with the selected configuration profile, to the exclusion of the adjustable parameters that are not associated with the selected configuration profile.

8. The configuration method according to claim 7, **characterized in that** the presentation of the parameters associated with the selected configuration profile (P01... P32) is done in an order determined as a function of the selected configuration profile (PR1... PR4).

9. The configuration method according to any one of claims 7 or 8, **characterized in that** the presentation of each of the parameters associated with the selected configuration profile (P01... P32) allows a confirmation or a modification with the entry interface of the stored current value.

10. The configuration method according to claim 9, **characterized in that**, for at least one of the parameters associated with the selected configuration profile, the modification of the stored value is limited to certain compatible values from among possible values of said parameter, the compatible values depending on the selected configuration profile.

11. The configuration method according to any one of claims 9 to 10, **characterized in that** the stored, confirmed and/or modified values are stored in a memory of the control unit.

12. The configuration method according to any one of claims 7 to 11, **characterized in that** the presentation on the visual interface of one of the parameters of the profile consists of a designation of the parameter to be adjusted by no more than three alphanumeric characters.

13. The configuration method according to any one of the preceding claims, **characterized in that** it includes a step for sequential presentation on the visual interface of the available configuration profiles, prior to the step for selection on the entry interface of a configuration profile (PR1... PR4).

14. A method for controlling a piece of home automation equipment, including a control step during which the home automation equipment is actuated as a function of stored adjustable input signals and operating parameters, **characterized in that** the control step is preceded by a configuration step according to the configuration method according to any one of the preceding claims.

15. The control method according to claim 14, **characterized in that** at least some of the input signals are received from a remote control (16, 18).

16. A control unit of a home automation equipment actuator (10) including a memory for storing current values of operating parameters of the actuator, **characterized in that** it comprises a person-machine interface allowing an installer to select a configuration profile from among several available configuration profiles for the home automation equipment (10) and a memory for storing default values of at least some of the operating parameters, associated with the selected configuration profiles and **in that** the operating parameters remain stored and available for successive executions of a control program executed by the control unit and calling on the stored values of at least some of said operating parameters.
